# EUROPEAN PATENT SPECIFICATION

(11) **EP 3 168 906 B1**
(45) Date of publication and mention of the grant of the patent: **20.11.2019**
(21) Application number: 14897283.9
(22) Date of filing: 10.07.2014
(51) Int. Cl.: H01M 4/20

(54) **METHOD OF MANUFACTURING LEAD-ACID BATTERY ELECTRODE**
VERFAHREN ZUR HERSTELLUNG EINER ELEKTRODE FÜR BLEIAKKUMULATOR
PROCÉDÉ DE PRODUCTION D'ÉLECTRODE POUR BATTERIE AU PLOMB

(43) Date of publication of application: 17.05.2017
(73) Proprietor: Hitachi Chemical Company, Ltd., Chiyoda-ku Tokyo 100-6606 (JP)
(72) Inventor: KARITANI, Kenji, Tokyo 100-6606 (JP); OBATA, Atsushi, Tokyo 100-6606 (JP); MIWA, Yoshiki, Tokyo 100-6606 (JP); TAMANO, Takahiro, Tokyo 100-6606 (JP)
(74) Representative: Mewburn Ellis LLP
(86) International application number: PCT/JP2014/068445
(87) International publication number: WO 2016/006080

(56) References cited:
- WO-A2-2008/029419
- JP-A- H0 294 257
- JP-A- H0 589 875
- JP-A- S6 217 952
- JP-A- H04 112 456
- JP-A- H04 181 654
- JP-A- 2006 278 000
- US-A- 4 109 393

## Description

### TECHNICAL FIELD

The present invention relates to a method of manufacturing a lead-acid battery electrode, and in particular to a method of filling a paste-like active material onto a grid substrate to fabricate an electrode that has not been chemically converted.

### BACKGROUND ART

Among secondary batteries that have conventionally been used, lead-acid batteries are advantageous in terms of price and safety. Several types of electrodes for the lead-acid batteries, such as a clad type and a paste type, are available. In particular, electrodes of the paste type can be manufactured at a high productivity and a relatively low cost, and are used in the lead-acid batteries for many purposes. The electrodes of the paste type for the lead-acid batteries are fabricated by filling a paste-like active material onto a grid substrate made of a lead alloy and subjecting an active material-filed electrode to aging and drying.

JP 04-2053 A (Patent Document 1) discloses a method of manufacturing a positive electrode for a lead-acid battery. In the method, a paste-like active material to which red lead has been added is filled onto a grid substrate, and thereafter the surface of a positive electrode is caused to react with sulfuric acid with a concentration of 10% or more by mass and 60% or less by mass to be converted into lead sulfate, thereby maintaining the rate of utilization of the positive active material and suppressing a reduction in cycle characteristics.

JP 09-92269 A (Patent Document 2) discloses a method of manufacturing an electrode for a lead-acid battery. In the method, an electrode prepared by filling an active material onto a grid substrate is caused to pass between a pair of soaking rollers containing dilute sulfuric acid in their surfaces, thereby preventing the electrode surface from being cracked in the subsequent step of drying.

WO2008/029419 discloses a plate for use in a lead acid battery, the plate comprising: a grid; and a paste applied to said grid, wherein the proportion of sulphate in said paste is 20-40% by weight and wherein the paste substantially has no free sulphuric acid. Document JP62-17952 discloses the passage of an electrode for use in a lead acid battery between rollers having surfaces wet with sulphuric acid.

### BACKGROUND ART DOCUMENTS

### PATENT DOCUMENTS

Patent Document 1: JP 04-2053 A
Patent Document 2: JP 09-92269 A

### SUMMARY OF INVENTION

### TECHNICAL PROBLEM

In the methods disclosed in Patent Documents 1 and 2, the temperature of sulfuric acid during application of sulfuric acid to an active material on the electrode surface and seasonal variations and daytime variations in the atmospheric temperature are not taken into consideration. Therefore, the time required to form a lead sulfate layer on the electrode surface is varied according to the working time of the day, which causes variations in density and thickness of the lead sulfate layer. Therefore, preliminary drying or primary drying may be performed depending on the manufacturing environment. However, it is necessary to frequently adjust the temperature in a preliminary drying furnace (primary drying furnace) or to reset the time taken for the electrode to pass through the furnace in order to suppress such variations. If the density or the thickness of the lead sulfate layer formed on the electrode surface is not constant, the electrode surface may be cracked or broken. Such cracking and breakage of the electrode surface is conspicuous if preliminary drying (primary drying) is performed. With the methods disclosed in Patent Documents 1 and 2, electrodes may adhere to each other when the electrodes are aged and dried with the electrode surfaces facing each other, and the active material may fall off when the electrodes adhering to each other are separated from each other.

An object of the present invention is to provide a method of manufacturing a lead-acid battery electrode that prevents an electrode surface from being cracked or broken.

Another object of the present invention is to provide a method of manufacturing a lead-acid battery electrode with which electrodes do not easily adhere to each other during manufacture.

A still further object of the present invention is to provide a method of manufacturing an electrode that allows for an increased initial capacity of a lead-acid battery.

### SOLUTION TO PROBLEM

The present invention aims at improving a method of manufacturing a lead-acid battery electrode.

According to the present invention there is provided a method of manufacturing a lead-acid battery electrode as specified in claim 1.

The term "active material-filled electrode" means an electrode that has not been aged or dried, in contrast to a yet-to-be chemically converted electrode (an electrode that has not been chemically converted) that has been aged and dried as discussed later.

Lead sulfate crystals are generated on the surface of the active material-filled electrode which has been treated with sulfuric acid due to a reaction between the paste-like active material filled onto the grid substrate and sulfuric acid. The "ordinary temperature" means 25°C.

The preliminary drying is intended to preliminarily dry the active material-filled electrode before it is aged in the subsequent step of aging and drying. The preliminary drying is alternatively referred to as "primary drying" in contrast to drying after aging. In the step of preliminarily drying (primary drying), extra water on the active material surface is removed, and lead sulfate crystals generated by a chemical reaction between the sulfuric acid and the active material are grown to form an appropriate lead sulfate layer. The temperature adjustment for the drying furnace, the drying time, and the drying method are important factors. If the preliminary drying temperature is too high, water contained in the paste-like active material is excessively evaporated, thereby hindering a chemical reaction in the subsequent step of aging and drying. Conversely, if the preliminary drying temperature is too low, it takes time to achieve an appropriate dry state, thereby lowering the production efficiency. The preliminary drying is performed by heating the inside of the drying furnace. The inside of the drying furnace is heated using an electric heater or hot air. If the electric heater is used, the temperature of the paste-like active material filled on the electrode is abruptly raised, and therefore it is difficult to appropriately maintain the amount of water contained in the paste-like active material and adjust the inside of the drying furnace to an appropriate temperature for forming a lead sulfate layer. If the drying furnace is heated using hot air, the active material surface is also dried by air, and therefore the amount of water contained in the paste-like active material can be kept at a prescribed level even if the temperature of the hot air is set to be low. Therefore, drying using hot air makes it relatively easy to form a lead sulfate layer on the active material surface and remove water on the active material surface to an extent that the active material on the surface does not fall off.

By using the method of manufacturing according to the present invention, it is possible to prevent the surface of an electrode that has not been chemically converted from being cracked or broken. Especially, even when preliminary drying (primary drying) is performed, it is possible to prevent the surface of an active material-filled electrode from being cracked or broken. Further, when the active material-filled electrodes are arranged to face each other in the step of aging and drying, the active materials do not easily adhere to each other when the surfaces of the adjacent active material-filled electrodes contact each other. Even if the active materials adhere to each other, the active materials can be prevented from falling off when the active materials adhering to each other are separated from each other. By treating the surface of the active material-filled electrode with sulfuric acid having a temperature higher than an ordinary temperature as in the present invention, the progress of a reaction between the surface (paste-like active material) of the active material-filled electrode and sulfuric acid can be sped up even if there are seasonal variations and daytime variations in atmospheric temperature (in particular, when the atmospheric temperature is in a range equal to or less than an ordinary temperature). As a result, lead sulfate crystals with high crystallinity are generated on the surface of the active material-filled electrode to form a uniform lead sulfate layer. The thus formed lead sulfate layer has a robust crystal structure as compared to the surface of the active material immediately after being filled onto the grid substrate, and therefore is considered to provide the effect described above.

The temperature of sulfuric acid used in the step of treating with sulfuric acid is adjusted in the range of 40°C to 60°C. If the surface of the active material-filled electrode is treated with sulfuric acid adjusted to such a temperature range, the amount of generated lead sulfate and the growth of crystals do not significantly vary and the reaction rapidly progresses as compared to when the surface of the active material-filled electrode is treated with sulfuric acid having an ordinary temperature. Thus, it is possible to obtain an electrode, the surface of which is not easily cracked or broken, even if the drying temperature in the subsequent step of preliminarily drying is set to be low as compared to that in the related art and the drying time is set to be short. If the temperature of sulfuric acid for treatment of the surface of the active material-filled electrode is higher than 60°C, large crystals of lead sulfate are precipitated on the electrode surface, thereby retarding the aging reaction. Consequently, the capacity of the lead-acid battery tends to be smaller. If the temperature of sulfuric acid is lower than 40°C, fine lead sulfate crystals are easily precipitated on the electrode surface. Such crystals hinder permeation and diffusion of an electrolyte from the electrode surface into the active material when the lead-acid battery is in use, which tends to reduce the capacity of the lead-acid battery.

The specific gravity of sulfuric acid used in the step of treating with sulfuric acid is adjusted in the range of 1.10 to 1.30 at a temperature of 20°C. If the specific gravity of sulfuric acid is higher than 1.30, that is, if the concentration of sulfuric acid is high, fine lead sulfate crystals are precipitated, thereby hindering permeation and diffusion of an electrolyte from the active material surface into the active material. Consequently, the capacity of the lead-acid battery tends to be smaller. If the specific gravity of sulfuric acid is lower than 1.10, that is, if the concentration of sulfuric acid is low, large crystals of lead sulfate are precipitated, thereby retarding the progress of the aging reaction. Consequently, the capacity of the lead-acid battery tends to be smaller.

When preliminary drying (primary drying) is performed after the surface of the active material-filled electrode has been treated with sulfuric acid having the above-mentioned adjusted temperature range and specific gravity range, the thickness of the lead sulfate layer formed on the surface of the active material-filled electrode is in the range of 100 µm to 800 µm. In other words, by controlling the treatment with sulfuric acid in the step of treating with sulfuric acid such that the lead sulfate layer formed on the surface of the active material-filled electrode after the preliminary drying has a thickness in the range of 100 µm to 800 µm, it is possible to reliably prevent the surface of an electrode, which has not been chemically converted, from being cracked or broken, and also to prevent electrodes superposed on each other from adhering to each other. Preferably, the treatment with sulfuric acid in the step of treating with sulfuric acid is controlled such that the thickness of the lead sulfate layer formed on the electrode surface is in the range of 100 µm to 500 µm. When the thickness of the lead sulfate layer is in the range of 100 µm to 500 µm, it is possible not only to prevent the surface of an electrode, which has not been chemically converted, from being cracked or broken and to prevent electrodes superposed on each other from adhering to each other, but also to maintain the battery capacity.

If the thickness of the lead sulfate layer is in the range of 100 µm or more, there will be no water on the electrode surface, and it is accordingly considered that the electrodes do not adhere to each other. In other words, if the thickness of the lead sulfate layer is less than 100 µm, the amount of water on the electrode surface will be larger, which makes the electrodes easily adhere to each other and may adversely affect the battery performance. If the thickness of the lead sulfate layer is more than 500 µm, the battery performance may be affected. If the thickness of the lead sulfate layer is more than 800 µm, the battery performance may be significantly affected (that is, the higher the sulfuric acid specific gravity is, the thicker the lead sulfate layer will be, which may lower the battery performance) .

Since in the present invention the step of treating with sulfuric acid is included in the step of pressing to apply the sulfuric acid to the surface of the active material-filled electrode, it is possible to reliably treat the surface of the active material-filled electrode with sulfuric acid without significantly changing the manufacturing line. Since the treatment with sulfuric acid is performed at the same time as the pressing, it is possible to form a robust lead sulfate layer having a uniform thickness on the surface of the active material-filled electrode. Therefore, it is possible to reliably prevent the surface of the active material-filled electrode from being cracked during preliminary drying (primary drying), and also prevent the active materials from adhering to each other during aging.

### EFFECT OF INVENTION

In the present invention, the surface of the active material-filled electrode is treated with sulfuric acid that is adjusted to a temperature higher than an ordinary temperature. This prevents the electrode surface from being cracked or broken. If the electrodes are arranged to face each other in the process of aging, the adjacent electrodes do not easily adhere to each other. Even if the electrodes adhere to each other, the active materials can be prevented from falling off when the active materials are separated from each other.

### BRIEF DESCRIPTION OF DRAWINGS

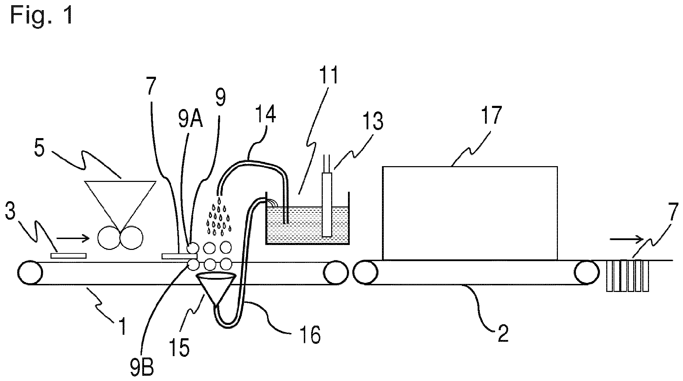

Fig. 1 is a schematic diagram illustrating an example process of manufacturing a lead-acid battery electrode according to an embodiment of the present invention.

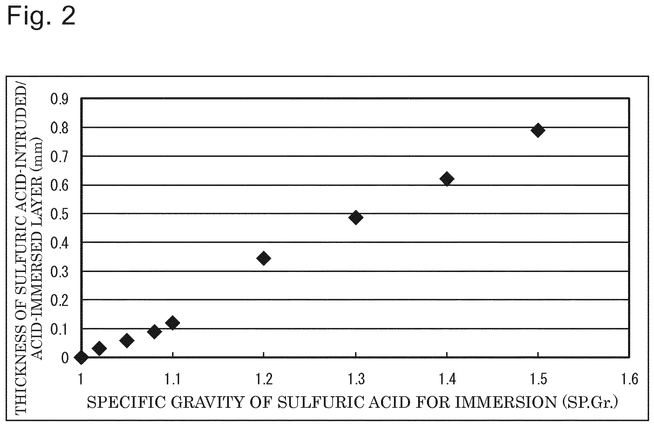

Fig. 2 is a graph indicating the relationship between the specific gravity of sulfuric acid used in the treatment with sulfuric acid (a specific gravity of sulfuric acid for immersion) and the thickness of a lead sulfate layer formed on a surface of an active material-filled electrode by the treatment with sulfuric acid (a thickness of a layer intruded with or immersed in sulfuric acid).

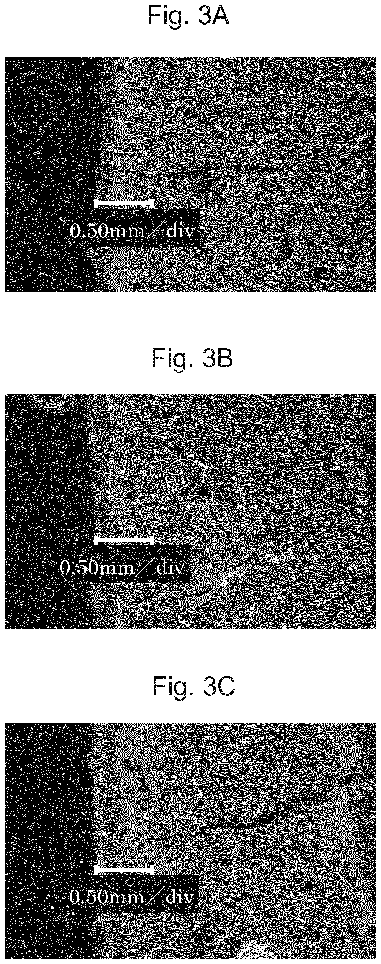

Figs. 3A to 3C are photomicrographs of a section of an active material-filled electrode treated with sulfuric acid having a specific gravity of 1.10 to 1.30, as taken in the vicinity of the surface of the electrode. The photomicrographs are captured using an optical digital metallurgical microscope and enlarged at a magnification of 100 times.

### DESCRIPTION OF EMBODIMENTS

An embodiment of the present invention will be described in detail below. Fig. 1 illustrates an example process of manufacturing a lead-acid battery electrode according to an embodiment of the present invention. In this example, a grid substrate 3 is mounted onto a belt conveyor 1. The grid substrate 3 may be a cast grid substrate or an expanded grid substrate. The grid substrate contains lead as a main component, and may also contain tin, calcium, antimony, or the like as additional components. In this example, a grid substrate made of a lead alloy containing calcium and tin is used. Addition of calcium can decrease the rate of self-discharge. Further, addition of tin can suppress corrosion of the electrode, which may likely occur when calcium is added.

An active material is filled or pasted onto the grid substrate 3 mounted on the belt conveyor 1 using a filler (or a pasting machine) 5 to fabricate an active material-filled electrode 7 (in the step of filling an active material). A paste-like active material is used since it is easy to be filled onto the grid substrate 3 mentioned above. The composition of the paste-like active material is not specifically limited. The paste-like active material is preferably fabricated by kneading lead powder containing lead monoxide, and water, sulfuric acid, and so forth (occasionally with additives such as cut carbon fiber pieces, carbon powder, lignin, barium sulfate, and red lead depending on the characteristics of positive and negative electrodes). The paste-like active material is filled onto the grid substrate in at least such an amount that the grid of the grid substrate 3 is completely covered. Preferably, the paste-like active material is filled in such an amount that the thickness of the paste-like active material reaches or exceeds the thickness of the frame at the outermost peripheral portion of the grid substrate 3.

The active material-filled electrode 7, which has been fabricated by filling the paste-like active material onto the grid substrate 3, is shaped by pressing (in the step of pressing) . In this example, a roll pressing machine 9 provided with a pair of rollers 9A and 9B is used. Specifically, the active material-filled electrode 7 is caused to pass through a gap between the pair of rollers 9A and 9B of the roll pressing machine 9 for pressing. The pair of rollers 9A and 9B may each include at least one roller. In this example, in order that the paste-like active material is sufficiently pressed to be filled on the substrate, the pair of rollers 9A and 9B each include three rollers as illustrated in Fig. 1.

According to the invention, a surface of the active material-filled electrode 7 is treated with sulfuric acid that is adjusted to a temperature higher than an ordinary temperature (in the step of treating with sulfuric acid). In this example, the sulfuric acid is stored in a sulfuric acid bath 11 made of a resin such as polypropylene or polyethylene which is chemically resistant, or made of a resin or metal coated with a fluorine resin. The sulfuric acid in the sulfuric acid bath 11 is heated to a preset temperature by a heating device 13. The heating device 13 includes a silica glass heater. The silica glass heater is immersed into the sulfuric acid bath 11 to heat the sulfuric acid. The temperature of sulfuric acid is measured using a K thermocouple, not illustrated, which is coated with a fluorine resin. A signal indicative of the measured temperature is transferred to a temperature controller, not illustrated, to control the temperature of the silica glass heater. In this example, the capacity of the sulfuric acid bath 11 is 2 m³, and three silica glass heaters 13 with a heater capacity of 2 kW are used. As the heating device 13, heaters coated with a fluorine resin may be used in place of the silica glass heaters described above. In this example, the sulfuric acid is heated to a temperature higher than an ordinary temperature as described above.

In this example, a specific gravity measurement instrument, not illustrated, is used to measure the specific gravity of the sulfuric acid. Reserve tanks, not illustrated, of concentrated sulfuric acid and pure water are connected to the sulfuric acid bath 11. Open-close valves for the reserve tanks are controlled to maintain a predetermined specific gravity of the sulfuric acid.

According to the invention, the step of treating with sulfuric acid is included in the step of pressing. That is, the step of treating a surface of the active material-filled electrode 7 with sulfuric acid is performed along with the step of pressing the active material-filled electrode 7. In this example, pressing surfaces of the pair of rollers have been immersed in advance into the sulfuric acid having a temperature higher than an ordinary temperature for use in the treatment with sulfuric acid. Specifically, the sulfuric acid is pumped up from the sulfuric acid bath 11 by an acid-resistant pump, not illustrated. Then, the pumped-up sulfuric acid is transferred using a tube 14, and dropped onto the pressing surfaces of the roll pressing machine 9 (pair of rollers 9A and 9B) to infiltrate the pressing surfaces with the sulfuric acid. The pressing surfaces may be covered with a cloth to infiltrate the pressing surfaces of the pair of rollers 9A and 9B with the sulfuric acid. A porous material or the like may be used to retain a sufficient amount of the sulfuric acid. For example, fluororubber, a porous material of an ultra-high molecular polyethylene material, a sintered porous material of a fluorine resin, or the like may be used. In this example, the peripheral surfaces of the pair of rollers, which are disposed respectively at upper and lower positions, are covered with a woven fabric made of polyester.

The pump includes control means for adjusting the flow rate of the sulfuric acid for controlling the discharge amount as appropriate. Specifically, the discharge amount is controlled so as to be variable in the range of 1 dm³/minute to 10 dm³/minute by a controller, not illustrated. In this example, an acid-resistant self-suction pump is used, and the discharge amount is set to 5 dm³/minute. The sulfuric acid bath 11 is controlled such that the specific gravity of the sulfuric acid is within a preset range. The liquid amount of the sulfuric acid in the sulfuric acid bath 11 is controlled to a preset range by a liquid level gauge, not illustrated.

As mentioned above, the sulfuric acid is dropped onto the pressing surfaces of the roll pressing machine 9 (pair of rollers 9A and 9B) to infiltrate the pressing surfaces of the pair of rollers 9A and 9B with the sulfuric acid. In this state, the active material-filled electrode 7 is caused to pass through the gap between the pair of rollers 9A and 9B. Thus, the sulfuric acid with which the pressing surfaces are infiltrated is applied to the surface of the active material-filled electrode 7 while the active material-filled electrode 7 is being pressed. In other words, crystals of the lead sulfate can be generated on the surface of the active material-filled electrode 7 while the pressing process improves the filling performance of the paste-like active material onto the active material-filled electrode 7.

A portion of the sulfuric acid dropped onto the pressing surfaces of the roll pressing machine 9 (pair of rollers 9A and 9B) is not applied to the surface of the active material-filled electrode 7. Such sulfuric acid (including sulfuric acid which is not infiltrated into the pair of rollers 9A and 9B) is dropped into a sulfuric acid recovery bath 15, and recovered and delivered to the sulfuric acid bath 11 through a tube 16 by an acid-resistant self-suction pump, not illustrated, capable of adjusting the discharge amount.

An unwanted muddy substance such as an active material and lead sulfate is present in the recovered sulfuric acid. Thus, a filter may be provided in the sulfuric acid recovery bath 15 to remove such a muddy substance. The muddy substance in the sulfuric acid has a high specific gravity, and is precipitated at the bottom portion of the sulfuric acid bath 11. Therefore, the sulfuric acid may be pumped up from the vicinity of the liquid surface of the sulfuric acid bath 11 and be supplied to the roll pressing machine 9.

The active material-filled electrode 7 which has been subjected to the pressing and the treatment with sulfuric acid is preliminarily dried (in the step of preliminarily drying) before being aged and dried. Specifically, the active material-filled electrode 7 which has been pressed and applied with the sulfuric acid at the same time as illustrated in Fig. 1 is caused to pass through a preliminary drying furnace 17 provided on a belt conveyor 2 that is adjacent to the belt conveyor 1. In this example, a circulatory hot-air drying furnace is used as the preliminary drying furnace 17. The temperature in the furnace is adjusted to 100°C to 150°C, the drying time is set to 15 seconds to 25 seconds, and the amount of water contained in the paste-like active material is set to 8% to 11% by mass.

The active material-filled electrode 7 which has been subjected to the preliminary drying is aged and dried under predetermined conditions as discussed later (in the step of aging and drying). Then, an electrode that has not been chemically converted is obtained.

### Examples

Examples according to the present invention will be described in detail below.

### <Fabrication of Positive Paste-like Active Material>

1000 kg of lead powder containing lead monoxide as a main component and 2 kg of PET fibers [fineness: 2.0 D (denier) ; fiber length: 3.0 mm] were mixed. Water was added to the mixture. After that, slurry prepared by adding 300 kg of red lead to 200 kg of dilute sulfuric acid (specific gravity: 1.260 at a temperature of 20°C) and stirring them was added to the mixture, and the resulting mixture was kneaded to fabricate a positive paste-like active material.

The amount of the water to be added was adjusted such that the hardness of the paste-like active material was constant in consideration of the filling performance of the paste-like active material onto the grid substrate.

### <Fabrication of Positive Electrode>

The positive paste-like active material fabricated by the method discussed above was filled onto the grid substrate 3 to fabricate a paste-type positive electrode that has not been chemically converted. That is, the positive paste-like active material was filled onto a cast grid substrate made of a lead-calcium alloy in a grid shape having a length of 240 mm, a width of 140 mm, and a thickness of 4.3 mm such that the electrode had a thickness of 4.4 mm. After that, the active material-filled electrode 7 was caused to pass between the pair of rollers 9A and 9B while sulfuric acid having a temperature and a specific gravity set to predetermined values were constantly dropped onto the pressing surfaces of the roll pressing machine (a pair of rollers) . Subsequently, the active material-filled electrode 7 was dried for 20 seconds in the circulatory hot-air drying furnace (the preliminary drying furnace) 17 at a temperature adjusted to 130°C for preliminary drying (primary drying).

After that, the active material-filled electrode 7 was aged and dried under the following conditions to fabricate a paste-type positive electrode that had not been chemically converted.

(Primary resting): four to eight hours at an atmospheric temperature of 75°C to 85°C and at a relative humidity of 95% to 98%
(Secondary resting): 20 hours or more at an atmospheric temperature of 50°C to 65°C and at a relative humidity of 50% or more
(Drying) : 24 hours or more at a temperature of 55°C to 65°C

### <Fabrication of Negative Paste-like Active Material>

900 kg of lead powder containing lead monoxide as a main component and 2.7 kg of PET fibers [fineness: 2.0 D (denier) ; fiber length: 3.0 mm], 4.5 kg of barium sulfate, and 1.8 kg of lignin were mixed. Water was added to the mixture. After that, 100 kg of dilute sulfuric acid was added to the mixture, and the resulting mixture was kneaded to fabricate a negative paste-like active material.

The amount of the water to be added was adjusted such that the hardness of the paste-like active material was constant in consideration of the filling performance of the paste-like active material onto the grid substrate.

### <Fabrication of Negative Electrode>

The negative paste-like active material fabricated by the method discussed above was filled onto the grid substrate to fabricate a paste-type negative electrode that has not been chemically converted. That is, the negative paste-like active material was filled onto a cast grid substrate made of a lead-calcium alloy in a grid shape having a length of 240 mm, a width of 140 mm, and a thickness of 2.5 mm such that the electrode had a thickness of 2.6mm. After that, the active material-filled electrode was caused to pass between the rollers while sulfuric acid having a temperature and a specific gravity set to predetermined values were constantly dropped onto the pressing surfaces of the rollers. Subsequently, the active material-filled electrode was dried for 20 seconds in a circulatory hot-air drying furnace at a temperature adjusted to 130°C for preliminary drying (primary drying).

After that, the active material-filled electrode was aged and dried under the following conditions to fabricate a paste-type negative electrode that had not been chemically converted.

(Primary resting) : 24 hours at an atmospheric temperature of 37°C to 43°C and at a relative humidity of 92% to 98%
(Secondary resting): 16 hours or more at an atmospheric temperature of 37°C to 43°C and at a relative humidity of 50% or more
(Drying) : 8 hours at a temperature of 35°C to 45°C, and 12 hours at a temperature of 65°C to 75°C

### [Examples 1 to 5 and Comparative Example 1]

Sulfuric acid was applied to the surfaces of the positive electrode and the negative electrode described above while varying the temperature and the specific gravity of the sulfuric acid to be dropped onto the pressing surfaces of the rollers as indicated in Table 1. Subsequently, the electrodes were subjected to preliminary drying (primary drying), and aging and drying to obtain electrodes that had not been chemically converted. It was verified whether or not the electrodes adhered to each other. The initial capacity of a lead-acid battery assembled using the electrodes that had not been chemically converted was also verified.

### <Evaluation Test 1>

For the not-yet-to be chemically converted electrode that were fabricated under the conditions of Examples 1 to 5 and Comparative Example 1, it was verified whether or not the electrodes, which had been subjected to aging and drying, adhered to each other as follows. The active material-filled electrodes which had been subjected to preliminary drying (primary drying) were stacked to be superposed on each other, and left as they were for two hours without applying a load thereto. After that, when the upper electrode was lifted up by hand, if the lower electrode was in tight contact with the upper electrode and lifted up together, even though slightly, the electrodes were evaluated to adhere to each other, which is indicated with a symbol "x"; a symbol "o" is given otherwise. The result of this test is shown in Table 1.

### <Evaluation Test 2>

A lead-acid battery was assembled using the electrodes fabricated in Examples 1 to 5, and subjected to a 1.0 CA discharge test under test conditions based on the JIS standard C 8704-2-1 to verify the high-rate discharge capacity. The discharge time before the final voltage was reached is also shown in Table 1. In this and in the following Tables,Examples indicated with "*" are reference examples which are not within the scope of the invention.

**[Table 1]**

| | Set values for sulfuric acid | | Whether or not electrodes adhered to each other | Discharge time (min.) |
|---|---|---|---|---|
| | Temperature (°C) | Specific gravity (g/cm³) | | |
| Ex. 1 | 50 | 1.20 | ○ | 30 |
| Ex. 2 | 40 | | ○ | 28 |
| Ex. 3 | 60 | | ○ | 28 |
| Ex. 4* | 30 | | ○ | 26 |
| Ex. 5* | 70 | | ○ | 22 |
| Comp. Ex. 1 | 25 | | X | - |

As shown in Table 1, the electrodes adhered to each other in Comparative Example 1 in which the sulfuric acid temperature was 25°C or less, but the electrodes did not adhere to each other in Examples 1 to 5 in which the sulfuric acid temperature was higher than 25°C.

In Examples 1 to 5 and Comparative Example 1, the electrodes were subjected to preliminary drying (primary drying), aging, and drying under the same condition after sulfuric acid was applied to the surfaces of the electrodes. It is considered that the electrodes did not adhere to each other when the sulfuric acid temperature was higher than 25°C (Examples 1 to 5) because the density of lead sulfate crystals was appropriate and the lead sulfate layer was appropriately formed when the step of preliminarily drying (primary drying) was finished, as compared to when the sulfuric acid temperature was 25°C or less (Comparative Example 1). When the sulfuric acid temperature is 25°C or less, it is necessary to grow lead sulfate crystals by raising the preliminary drying (primary drying) temperature and extending the drying time. When the sulfuric acid temperature is higher than 25°C, the preliminary drying (primary drying) can be completed in a shorter time as compared to when the sulfuric acid temperature is 25°C or less, thereby reducing the amount of energy for maintaining the temperature in the preliminary drying (primary drying) furnace.

From the comparison between Examples 1 to 3 and Examples 4 and 5, it is observed that the high-rate discharge capacity was larger when the sulfuric acid temperature was set to 40°C to 60°C as compared to when the sulfuric acid temperature was lower than 40°C or higher than 60°C. When the sulfuric acid temperature is set to be high, large lead sulfate crystals are precipitated, which hinders the progress of the aging reaction. When the sulfuric acid temperature is set to be low, fine lead sulfate crystals are precipitated, and the lead sulfate layer hinders permeation and diffusion of sulfuric acid working as an electrolyte into the active material. Therefore, the initial capacity is considered to be lowered in either case. For this reason, the condition that the sulfuric acid temperature is 40°C to 60°C (Examples 1 to 3) is particularly preferable in order to form a lead sulfate layer on an active material surface layer after the active material is filled.

### [Examples 6 to 9]

An electrode that had not been chemically converted was manufactured through the same steps as those for Example 1 except that the temperature and the specific gravity of the sulfuric acid to be dropped onto the peripheral surfaces of the rollers were varied as indicated in Table 2. It was verified whether or not the manufactured electrodes adhered to each other. The battery capacity of the lead-acid battery assembled using the electrodes was also verified.

Whether or not the manufactured electrodes adhered to each other was evaluated in the same manner as in the evaluation test 1 discussed above.

### <Evaluation Test 3>

For the electrodes fabricated in Examples 1 and 6 to 9, a 0.1 CA discharge test was conducted under test conditions based on the JIS standard C 8704-2-1 to verify the low-rate discharge capacity. The discharge time before the final voltage was reached is also shown in Table 2 together with whether or not the electrodes adhered to each other.

**[Table 2]**

| | Set values for sulfuric acid | | Whether or not electrodes adhered to each other | Discharge time (min.) |
|---|---|---|---|---|
| | Temperature (°C) | Specific gravity (g/cm³) | | |
| Ex. 1 | 50 | 1.20 | ○ | 10.0 |
| Ex. 6 | | 1.10 | ○ | 9.9 |
| Ex. 7 | | 1.30 | ○ | 9.8 |
| Ex. 8* | | 1.05 | ○ | 9.4 |
| Ex. 9* | | 1.35 | ○ | 9.5 |

As shown in Table 2, the electrodes did not adhere to each other when the sulfuric acid temperature was 50°C (constant) and the specific gravity was varied from 1.05 to 1.35 (Examples 1 and 6 to 9) .

From the comparison between Examples 1, 6, and 7 and Examples 8 and 9, it is observed that the low-rate discharge capacity was larger when the specific gravity of the sulfuric acid was set to 1.10 to 1.30 as compared to when the specific gravity of the sulfuric acid was lower or higher than that range. When the sulfuric acid specific gravity is set to be lower than 1.10 or set to be higher than 1.30, the low-rate discharge capacity tends to be lowered. When the sulfuric acid specific gravity is high, fine lead sulfate crystals are precipitated, and the lead sulfate hinders permeation and diffusion of sulfuric acid working as an electrolyte into the active material. When the sulfuric acid specific gravity is low, large lead sulfate crystals are precipitated, which hinders the progress of the aging reaction. Therefore, the capacity is considered to be lowered in either case.

As can be known from the results of Examples 1 to 9 and Comparative Example 1, it is the most preferable to apply sulfuric acid having a specific gravity of 1.10 to 1.30 and a temperature of 40°C to 60°C to the electrodes in order to suppress adhesion between the electrodes after filling of the active material and maintain the battery characteristics.

### [Examples 10 to 14 and Comparative Examples 2 to 5]

As the treatment of the active material-filled electrode with sulfuric acid, the surface of the active material-filled electrode, which had been pressed before the treatment with sulfuric acid, was immersed into sulfuric acid with varied conditions of the temperature and the specific gravity as indicated in Table 3 shown below. Thus, a lead sulfate layer was formed on the surface of the active material-filled electrode. An electrode that had not been chemically converted was manufactured through the same steps as those in Example 1 except for the step described above. In these examples, the thickness of the lead sulfate layer formed on the electrode surface was verified with respect to the specific gravity of the sulfuric acid. In addition, it was verified whether or not the manufactured electrodes adhered to each other. The battery capacity of the lead-acid battery assembled using the electrodes was also verified.

Whether or not the manufactured electrodes adhered to each other was evaluated in the same manner as in the evaluation test 1 discussed above. For the battery capacity, the low-rate discharge capacity was verified as in the evaluation test 3 discussed above.

### <Evaluation Test 4>

The sections of the electrodes fabricated in Examples 10 to 14 and Comparative Examples 2 to 5 were observed using an optical digital metallurgical microscope (MX-1200II manufactured by Nakaden International and having a magnification of 100 times), and the observed state was verified. From the verified state of the vicinity of the surface of the electrode, the relationship between the specific gravity of the sulfuric acid used in the treatment with sulfuric acid (the specific gravity of the sulfuric acid used for immersion) and the thickness of the lead sulfate layer formed on the electrode surface (the thickness of the acid-immersed layer due to intrusion of sulfuric acid) was verified. The results are indicated in Figs. 2 and 3 and Table 3 together with the corresponding sulfuric acid specific gravities.

**[Table 3]**

| | Set values for sulfuric acid | | Thickness of lead sulfate layer on electrode surface (mm) | Whether or not electrodes adhered to each other | Discharge time (min.) |
|---|---|---|---|---|---|
| | Temperature (°C) | Specific gravity (g/cm³) | | | |
| Comp. Ex. 2 | 40 | 1.00 | 0 | X | 9.3 |
| Comp. Ex. 3 | | 1.02 | 0.03 | X | 9.3 |
| Comp. Ex. 4 | | 1.05 | 0.06 | X | 9.4 |
| Comp. Ex. 5 | | 1.08 | 0.09 | X | 9.5 |
| Ex. 10 | | 1.10 | 0.12 | ○ | 9.9 |
| Ex. 11 | | 1.20 | 0.35 | ○ | 10.0 |
| Ex. 12 | | 1.30 | 0.48 | ○ | 9.8 |
| Ex. 13* | | 1.40 | 0.62 | ○ | 9.5 |
| Ex. 14* | | 1.50 | 0.79 | ○ | 9.4 |

From Fig. 2 and Table 3, it was found that the thickness of the lead sulfate layer formed on the electrode surface was varied according to the specific gravity of sulfuric acid used in the treatment with sulfuric acid. From Figs. 2 and 3 and Table 3, adhesion between the electrodes was not observed when the thickness of the lead sulfate layer formed on the electrode surface was in the range of 100 µm to 800 µm (0.1 mm to 0.8 mm) (Examples 10 to 14). It was also found that the electrodes did not adhere to each other and a good discharge time was obtained particularly when the thickness of the lead sulfate layer formed on the electrode surface was in the range of 100 µm to 500 µm (0.1 mm to 0.5 mm) (Examples 10 to 12).

As can be known from the foregoing, the results of Examples 10 to 14 and Comparative Examples 2 to 5 indicate that the electrodes can be prevented from adhering to each other by controlling the treatment with sulfuric acid such that the thickness of the lead sulfate layer formed on the electrode surface after the preliminary drying is in the range of 100 µm to 800 µm. The results further indicate that the electrodes can be prevented from adhering to each other while maintaining the battery characteristics by controlling the treatment with sulfuric acid such that the thickness of the lead sulfate layer formed on the electrode surface after the preliminary drying is in the range of 100 µm to 500 µm (see Fig. 3).

Although an embodiment of the present invention has been specifically described above, the present invention is not limited to the embodiment and the examples described herein. That is, the conditions described in the embodiment and the examples described above may be changed or modified based on the technical concept of the present invention unless specifically stated otherwise.

### SIGN LISTING

- 1, 2: Belt conveyor
- 3: Grid substrate
- 5: Filler
- 7: Active material-filled electrode
- 9A, 9B: Roller
- 11: Sulfuric acid bath
- 13: Heater (quartz glass heater)
- 14, 16: Tube
- 15: Sulfuric acid recovery tank
- 17: Preliminary drying furnace (Primary drying furnace)

## Claims

1. A method of manufacturing a lead-acid battery electrode, comprising the steps of:
filling a paste-like active material onto a grid substrate (3) made of a lead alloy to fabricate an active material-filled electrode (7);
pressing the active material-filled electrode (7); and
aging and drying the active material-filled electrode (7) which has been pressed in the step of pressing to obtain an electrode that has not been chemically converted, wherein:
the method further comprises:
treating a surface of the active material-filled electrode (7) with sulfuric acid that is adjusted to a constant temperature higher than an ordinary temperature; and
preliminarily drying the active material-filled electrode (7), the surface of which has been treated with the sulfuric acid in the step of treating with sulfuric acid, before the active material-filled electrode (7) is aged in the step of aging and drying, wherein:
the sulfuric acid used in the step of treating with sulfuric acid has a temperature that is adjusted in the range of 40°C to 60°C, and has a specific gravity that is adjusted in the range of 1.10 to 1.30 (at a temperature of 20°C);
the step of treating with sulfuric acid is included in the step of pressing;
in the step of pressing, a roll pressing machine (9) provided with a pair of rollers (9A, 9B) having pressing surfaces is used to press the active material-filled electrode (7) by causing the active material-filled electrode (7) to pass between the pair of rollers (9A, 9B); and
the sulfuric acid is infiltrated into the press surfaces of the pair of rollers (9A, 9B) and the sulfuric acid is applied to the surface of the active material-filled electrode (7) when the active material-filled electrode (7) passes between the pair of rollers (9A, 9B).

2. The method of manufacturing a lead-acid battery electrode according to claim 1, wherein
a lead sulfate layer formed on the surface of the active material-filled electrode (7) which has been preliminarily dried in the step of preliminarily drying has a thickness of 100 µm to 800 µm.

3. The method of manufacturing a lead-acid battery electrode according to claim 1, wherein
a lead sulfate layer formed on the surface of the active material-filled electrode (7) which has been preliminarily dried in the step of preliminarily drying has a thickness of 100 µm to 500 µm.

## Patentansprüche

1. Verfahren zur Herstellung einer Blei-Säure-Batterieelektrode, das folgende Schritte umfasst:
Füllen eines pastösen aktiven Materials auf ein Gittersubstrat (3), das aus einer Bleilegierung besteht, um eine mit aktivem Material gefüllte Elektrode (7) zu erzeugen;
Pressen der mit aktivem Material gefüllten Elektrode (7); und
Altern und Trocknen der mit aktivem Material gefüllten Elektrode (7), die in dem Schritt des Pressens gepresst wurde, um eine Elektrode zu erhalten, die nicht chemisch umgesetzt wurde, wobei:
das Verfahren weiters Folgendes umfasst:
Behandeln einer Oberfläche der mit aktivem Material gefüllten Elektrode (7) mit Schwefelsäure, die auf eine konstante Temperatur eingestellt ist, die höher als eine gewöhnliche Temperatur ist; und
vorläufiges Trocknen der mit aktivem Material gefüllten Elektrode (7), deren Oberfläche in dem Schritt des Behandelns mit Schwefelsäure mit der Schwefelsäure behandelt wurde, bevor die mit aktivem Material gefüllte Elektrode (7) in dem Schritt des Alterns und Trocknens gealtert wird, wobei:
die in dem Schritt des Behandelns mit Schwefelsäure eingesetzte Schwefelsäure eine Temperatur aufweist, die in dem Bereich von 40 °C bis 60 °C eingestellt ist, und eine spezifische Dichte aufweist, die in dem Bereich von 1,10 bis 1,30 (bei einer Temperatur von 20 °C) eingestellt ist;
der Schritt des Behandelns mit Schwefelsäure in dem Schritt des Pressens umfasst ist;
in dem Schritt des Pressens eine Rollpressmaschine (9), die mit einem Paar Rollen (9A, 9B) ausgestattet ist, die Pressoberflächen aufweisen, eingesetzt wird, um die mit aktivem Material gefüllte Elektrode (7) zu pressen, indem bewirkt wird, dass die mit dem aktiven Material gefüllte Elektrode (7) zwischen dem Paar Rollen (9A, 9B) hindurchgeht; und
die Schwefelsäure in die Pressoberflächen des Paars von Rollen (9A, 9B) infiltriert wird und die Schwefelsäure auf die Oberfläche der mit aktivem Material gefüllten Elektrode (7) aufgebracht wird, wenn die mit aktivem Material gefüllte Elektrode (7) zwischen dem Paar Rollen (9A, 9B) hindurchgeht.

2. Verfahren zur Herstellung einer Blei-Säure-Batterieelektrode nach Anspruch 1, wobei
eine Bleisulfatschicht, die auf der Oberfläche der mit aktivem Material gefüllten Elektrode (7) gebildet wird, die in dem Schritt des vorläufigen Trocknens vorläufig getrocknet wurde, eine Dicke von 100 µm bis 800 µm aufweist.

3. Verfahren zur Herstellung einer Blei-Säure-Batterieelektrode nach Anspruch 1, wobei
eine Bleisulfatschicht, die auf der Oberfläche der mit aktivem Material gefüllten Elektrode (7) gebildet wird, die in dem Schritt des vorläufigen Trocknens vorläufig getrocknet wurde, eine Dicke von 100 µm bis 500 µm aufweist.

## Revendications

1. Procédé de fabrication d'une électrode de batterie au plomb-acide, comprenant les étapes consistant à :
déposer un matériau actif analogue à une pâte sur un substrat en grille (3) constitué d'un alliage de plomb pour fabriquer une électrode remplie de matériau actif (7) ;
presser l'électrode remplie de matériau actif (7) ; et
faire vieillir et sécher l'électrode remplie de matériau actif (7) qui a été pressée dans l'étape de pressage pour obtenir une électrode qui n'a pas été convertie chimiquement, dans lequel :
le procédé comprend en outre les étapes consistant à :
traiter une surface de l'électrode remplie de matériau actif (7) avec de l'acide sulfurique qui est ajusté à une température constante supérieure à une température ordinaire ; et
sécher préalablement l'électrode remplie de matériau actif (7), dont la surface a été traitée avec l'acide sulfurique dans l'étape de traitement avec de l'acide sulfurique, avant que l'électrode remplie de matériau actif (7) ne vieillisse dans l'étape de vieillissement et séchage, dans lequel :
l'acide sulfurique utilisé dans l'étape de traitement avec de l'acide sulfurique a une température qui est ajustée dans la plage de 40°C à 60°C et une densité qui est ajustée dans la plage de 1,10 à 1,30 (à une température de 20°C) ;
l'étape de traitement avec de l'acide sulfurique est incluse dans l'étape de pressage ;
dans l'étape de pressage, une presse à rouleaux (9) munie d'une paire de rouleaux (9A, 9B) ayant des surfaces de pressage est utilisée pour presser l'électrode remplie de matériau actif (7) en amenant l'électrode remplie de matériau actif (7) à passer entre la paire de rouleaux (9A, 9B) ; et
l'acide sulfurique est infiltré dans les surfaces de pressage de la paire de rouleaux (9A, 9B) et l'acide sulfurique est appliqué sur la surface de l'électrode remplie de matériau actif (7) lorsque l'électrode remplie de matériau actif (7) passe entre la paire de rouleaux (9A, 9B).

2. Procédé de fabrication d'une électrode de batterie au plomb-acide selon la revendication 1, dans lequel
une couche de sulfate de plomb formée sur la surface de l'électrode remplie de matériau actif (7) qui a été préalablement séchée dans l'étape de séchage préalable a une épaisseur de 100 µm à 800 µm.

3. Procédé de fabrication d'une électrode de batterie au plomb-acide selon la revendication 1, dans lequel
une couche de sulfate de plomb formée sur la surface de l'électrode remplie de matériau actif (7) qui a été préalablement séchée dans l'étape de séchage préalable a une épaisseur de 100 µm à 500 µm.
